# EUROPEAN PATENT APPLICATION

(11) **EP 4 818 783 A1**
(43) Date of publication of application: **07.10.2026**
(21) Application number: 24906929.5
(22) Date of filing: 28.10.2024
(51) Int. Cl.: G02B 13/00, G02B 13/18

(54) **OPTICAL SYSTEM AND IMAGING DEVICE**

(30) Priority: 22.12.2023 JP 2023217222
(71) Applicant: Sony Group Corporation, Tokyo 108-0075 (JP)
(72) Inventor: NAKAMURA, Tomoyuki, Tokyo 108-0075 (JP)
(74) Representative: D Young & Co LLP
(86) International application number: PCT/JP2024/038396
(87) International publication number: WO 2025/134541

(57) **Abstract**

An optical system according to the present disclosure includes a plurality of lens units including a first lens unit, a second lens unit, and a third lens unit in order from an object side toward an image plane side. The optical system includes, as the plurality of lens units, at least one or more units that each include a lens having refractive power on both surfaces, and at least one or more units that each include a substrate and a lens disposed on the substrate and having refractive power.

## Description

### Technical Field

The present disclosure relates to an optical system and an imaging apparatus.

### Background Art

In recent years, an optical system to be used in an endoscope, an HMD (head-mounted display), a mobile phone, or the like has required a compact lens of about 2 mm square or less. Such a compact lens has been required to have reflow resistance due to its very small size. Among resin materials for formation of the compact lens, a UV curable material is widely known as a material having high heat resistance. PTL 1 proposes an optical system that is reduced in size with a UV curable material.

### Citation List

### Patent Literature

PTL 1: Japanese Unexamined Patent Application Publication No. 2022-108710

### Summary of the Invention

Although having superior manufacturability, an optical system including a UV curable material described in PTL 1 has difficulty in achieving favorable correction of aberration at a wider angle of view or at a brighter F-number. A reason for this is that the optical system has only three surfaces having refractive power. Meanwhile, use of a thermosetting material or the like as a resin material having high heat resistance allows for provision of a lens having refractive power on both surfaces; however, the thermosetting material is limited in variation. It is thus difficult to achieve favorable correction of chromatic aberration.

It is desirable to provide an optical system that is easily reduced in size and has high optical performance, and an imaging apparatus including such an optical system.

An optical system according to an embodiment of the present disclosure includes a plurality of lens units including a first lens unit, a second lens unit, and a third lens unit in order from an object side toward an image plane side. The optical system includes, as the plurality of lens units, at least one or more units that each include a lens having refractive power on both surfaces, and at least one or more units that each include a substrate and a lens disposed on the substrate and having refractive power.

An imaging apparatus according to an embodiment of the present disclosure includes an optical system, and an imaging element that outputs an imaging signal corresponding to an optical image formed by the optical system. The optical system is configured by the optical system according to an embodiment of the present disclosure.

In the optical system or the imaging apparatus according to an embodiment of the present disclosure, configurations of the plurality of lens units are optimized to enable easy size reduction and high optical performance.

### Brief Description of the Drawings

[FIG. 1] FIG. 1 is a lens cross-sectional view of a first configuration example (Example 1) of an optical system according to an embodiment of the present disclosure.
[FIG. 2] FIG. 2 is an aberration diagram illustrating longitudinal aberration in the optical system according to Example 1.
[FIG. 3] FIG. 3 is a lens cross-sectional view of a second configuration example (Example 2) of an optical system according to an embodiment.
[FIG. 4] FIG. 4 is an aberration diagram illustrating longitudinal aberration in the optical system according to Example 2.
[FIG. 5] FIG. 5 is a lens cross-sectional view of a third configuration example (Example 3) of an optical system according to an embodiment.
[FIG. 6] FIG. 6 is an aberration diagram illustrating longitudinal aberration in the optical system according to Example 3.
[FIG. 7] FIG. 7 is a schematic diagram of distributions of a refractive index nd and an Abbe number νd of an existing UV curable material.
[FIG. 8] FIG. 8 is a schematic diagram of distributions of the refractive index nd and the Abbe number νd of each of the existing UV curable material and an existing thermosetting material.
[FIG. 9] FIG. 9 is a block diagram illustrating a configuration example of an imaging apparatus according to an embodiment.
[FIG. 10] FIG. 10 is a block diagram depicting an example of schematic configuration of a vehicle control system.
[FIG. 11] FIG. 11 is a diagram of assistance in explaining an example of installation positions of an outside-vehicle information detecting section and an imaging section.
[FIG. 12] FIG. 12 is a diagram illustrating an example of a schematic configuration of an endoscope system.
[FIG. 13] FIG. 13 is a block diagram illustrating an example of a functional configuration of a camera and a camera control unit (CCU) illustrated in FIG. 12.
[FIG. 14] FIG. 14 is a diagram illustrating an example of a schematic configuration of a microscopic surgery system.

### Modes for Carrying Out the Invention

Hereinafter, description is given in detail of some embodiments of the present disclosure with reference to the drawings. It is to be noted that the description is given in the following order.
1. Basic Configuration of Optical System
2. Workings and Effects
3. Example of Application to Imaging Apparatus
4. Numerical Examples of Optical Systems
5. Practical Application Examples
6. Other Embodiments

### <1. Basic Configuration of Optical System>

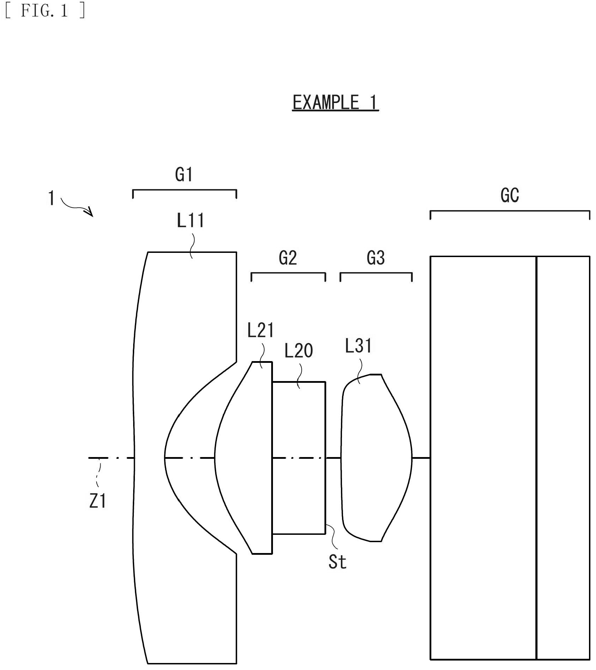

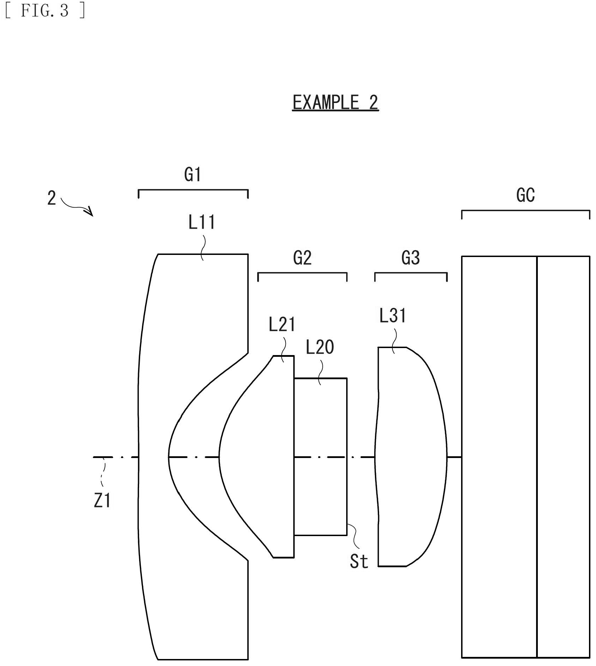

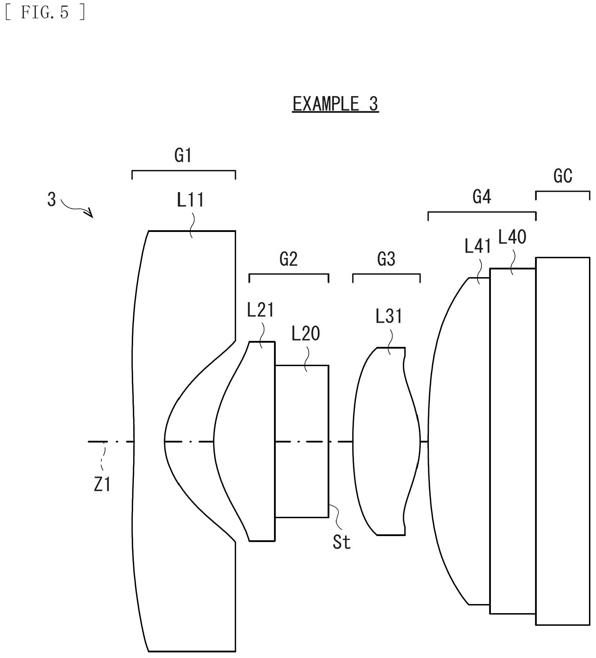

FIG. 1 illustrates a first configuration example of an optical system according to an embodiment of the present disclosure, and corresponds to a configuration of Example 1 described later. FIG. 3 illustrates a second configuration example of an optical system according to an embodiment, and corresponds to a configuration of Example 2 described later. FIG. 5 illustrates a third configuration example of an optical system according to an embodiment, and corresponds to a configuration of Example 3 described later.

In FIG. 1 and other drawings, Z1 denotes an optical axis. An optical member GC such as a cover glass for protecting an imaging element may be disposed between an image plane and any of optical systems 1 to 3 according to the first to third configuration examples. Further, in addition to the cover glass, various optical filters such as a low-pass filter or an infrared cut filter may be disposed as the optical member GC. In a case where the optical system according to an embodiment is applied to an imaging apparatus, an image plane of the optical system corresponds to an imaging surface of an imaging element such as a CCD (Charge Coupled Device) sensor or a CMOS (Complementary Metal Oxide Semiconductor) sensor.

It is to be noted that, in lens cross-sectional views of FIG. 1 and other drawings, the left side is a subject (object) side (a front side) and the right side is an image plane side (a rear side). Further, FIG. 1 and other drawings illustrate a lens arrangement in a state of focusing at an object distance of 50 mm. The term "object distance" used herein refers to a distance from a surface vertex, of the optical system, closest to an object.

Hereinafter, description is given of a configuration of an optical system according to an embodiment of the present disclosure, as appropriate, in association with the optical systems 1 to 3 according to the respective configuration examples illustrated in FIG. 1 and other drawings. However, a technique according to the present disclosure is not limited to the illustrated configuration examples.

The optical system according to an embodiment includes a plurality of lens units including a first lens unit G1, a second lens unit G2, and a third lens unit G3 in order from the object side toward the image plane side.

Further, the optical system according to an embodiment includes, as the plurality of lens units, at least one or more units that each include a lens having refractive power on both surfaces, and at least one or more units that each include a substrate and a lens disposed on the substrate and having refractive power.

It is to be noted that, in Examples described later, the optical systems 1 and 2 according to Examples 1 and 2 each include the first lens unit G1 to the third lens unit G3 as the plurality of lens units. The optical system 3 according to Example 3 includes the first lens unit G1 to the third lens unit G3 and a fourth lens unit G4 as the plurality of lens units.

Further, in the optical systems 1 and 2 according to Examples 1 and 2 out of Examples described later, the first lens unit G1 and the third lens unit G3 are each a unit that includes a lens having refractive power on both surfaces, and the second lens unit G2 is a unit that includes a substrate and a lens disposed on the substrate and having refractive power. Furthermore, in the optical system 3 according to Example 3, the first lens unit G1 and the third lens unit G3 are each a unit that includes a lens having refractive power on both surfaces, and the second lens unit G2 and the fourth lens unit G4 are each a unit that includes a substrate and a lens disposed on the substrate and having refractive power.

In addition thereto, the optical system according to an embodiment may further satisfy a predetermined conditional expression or the like described later.

### <2. Workings and Effects>

Next, description is given of workings and effects of the optical system according to an embodiment of the present disclosure. In addition thereto, description is given of a more preferable configuration of the optical system according to an embodiment of the present disclosure as well as the workings and effects thereof.

It is to be noted that the effects described herein are merely exemplary and are nonlimiting, and other effects may be achieved.

According to the optical system according to an embodiment, the configurations of the plurality of lens units are optimized to enable easy size reduction and high optical performance.

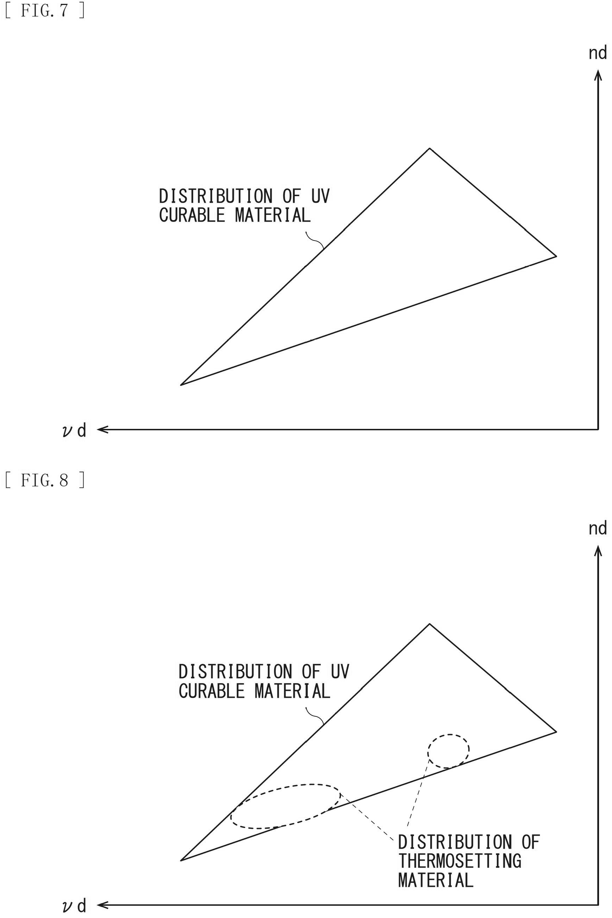

FIG. 7 is a schematic diagram of distributions of a refractive index nd and an Abbe number νd of an existing UV curable material. FIG. 8 is a schematic diagram of distributions of the refractive index nd and the Abbe number νd of each of the UV curable material and a thermosetting material. Here, the Abbe number νd is defined by the following equation (A), provided that a refractive index at a d-line (a wavelength of 587.6 nm) is nd, a refractive index at an F-line (a wavelength of 486.13 nm) is nF, and a refractive index at a C-line (656.27 nm) is nC. $νd = \left(nd-1\right) / \left(nF-nC\right)$ (A)

As illustrated in FIGs. 7 and 8, the UV curable material has a wide distribution range, whereas the thermosetting material has a more limited distribution range than the distribution range of the UV curable material. The wide distribution of the UV curable material is effective for correction of aberration, particularly chromatic aberration. Here, a lens including a UV curable material is typically disposed on a substrate and thus has only one surface having refractive power. Accordingly, the lens including the UV curable material has difficulty in correcting various other aberrations, particularly spherical aberration and astigmatism. Meanwhile, a lens including a thermosetting material may typically have refractive power on both surfaces. Accordingly, this lens is effective for correction of aberration, particularly the spherical aberration and astigmatism. However, the thermosetting material has a limited distribution range as described above, resulting in difficulty, particularly in correcting the chromatic aberration. Accordingly, in consideration of making use of both of these features, the optical system preferably includes, as the plurality of lens units, at least one or more units that each include a lens including a thermosetting material and having refractive power on both surfaces, and at least one or more units that each include a lens disposed on a substrate, including a UV curable material, and having refractive power. It is to be noted that the lens having refractive power on both surfaces may be a lens including any material, other than the thermosetting material, that has optical properties equivalent to those of the thermosetting material. Likewise, the lens disposed on the substrate and having refractive power (on only one surface) may be a lens including any material, other than the UV curable material, that has optical properties equivalent to those of the UV curable material.

Further, in the optical system according to an embodiment, the first lens unit G1 may have negative refractive power, and the third lens unit G3 may have positive refractive power. This configuration facilitates a reduction in lens diameter at a wider angle of view, and extension of a back focus.

Furthermore, in the optical system according to an embodiment, the second lens unit G2 may have positive refractive power. This configuration makes it easier to dispose an entrance pupil on the object side and to reduce a lens size.

Furthermore, in the optical system according to an embodiment, the second lens unit G2 may include a substrate and a lens disposed on an object side of the substrate and having positive refractive power. This configuration allows a first lens included in the first lens unit G1 and a second lens included in the second lens unit G2 to mainly correct the chromatic aberration of the total lens system, facilitating correction of both chromatic aberration of magnification and axial chromatic aberration. Disposing the second lens including a material, such as the UV curable material, with many variations on an object side of the second lens unit G2 facilitates correction of both the chromatic aberration of magnification and the axial chromatic aberration.

Furthermore, in the optical system according to an embodiment, the second lens unit G2 may include the second lens, and the following conditional expression may be satisfied: $10 < ν 2 < 60$ (1) where
ν2 denotes an Abbe number of the second lens.

The conditional expression (1) defines the Abbe number of the second lens necessary for correction of the chromatic aberration. When ν2 exceeds an upper limit of the conditional expression (1), the chromatic aberration of magnification is insufficiently corrected. When ν2 falls below a lower limit of the conditional expression (1), the chromatic aberration of magnification is excessively corrected.

Furthermore, in the optical system according to an embodiment, the first lens unit G1 may include the first lens, the second lens unit G2 may include the second lens, and the following conditional expression may be satisfied: $10 < ν 1 - ν 2 < 60$ (2) where
ν1 denotes an Abbe number of the first lens, and
ν2 denotes an Abbe number of the second lens.

The conditional expression (2) defines a difference between the Abbe number of the first lens and the Abbe number of the second lens. The difference is necessary to make corrections of both the axial chromatic aberration and the chromatic aberration of magnification. When ν1 - ν2 exceeds an upper limit of the conditional expression (2), the axial chromatic aberration is excessively corrected. When ν1 - ν2 falls below a lower limit of the conditional expression (2), the chromatic aberration of magnification is insufficiently corrected.

Furthermore, in the optical system according to an embodiment, the first lens unit G1 may include the first lens, and the following conditional expression may be satisfied: $- 2.0 < f 1 / f < - 0.3$ (3) where
f1 denotes a focal length of the first lens, and
f denotes a focal length of the total system.

The conditional expression (3) defines the focal length of the first lens with the focal length of the total system. When f1/f exceeds an upper limit of the conditional expression (3), an exit pupil is positioned on the image plane side, leading to a larger lens diameter. When f1/f falls below a lower limit of the conditional expression (3), refractive power of the first lens becomes excessively strong, resulting in processing difficulty.

Furthermore, in the optical system according to an embodiment, the second lens unit G2 may include the second lens, and the following conditional expression may be satisfied: $0.3 < f 2 / f < 3.0$ (4) where
f2 denotes a focal length of the second lens, and
f denotes a focal length of the total system.

The conditional expression (4) defines the focal length of the second lens with the focal length of the total system. When f2/f exceeds an upper limit of the conditional expression (4), extension of the back focus is difficult and a thickness of the optical member GC such as an optical filter is relatively increased due to size reduction. It is thus difficult to satisfy an optical specification demanded of the optical system. When f2/f falls below a lower limit of the conditional expression (4), refractive power of the second lens becomes excessively strong, making it difficult to correct aberration, mainly the spherical aberration and astigmatism.

It is to be noted that setting the numerical ranges of the conditional expressions (1) to (4) to those of the following conditional expressions (1A) to (4A) enables achievement of higher effects. $20 < ν 2 < 45$ (1A) $15 < ν 1 - ν 2 < 50$ (2A) $- 1.5 < f 1 / f < - 0.5$ (3A) $0.5 < f 2 / f < 2.0$ (4A)

### <3. Example of Application to Imaging Apparatus>

Next, description is given of an example of application of the optical system according to an embodiment of the present disclosure to an imaging apparatus.

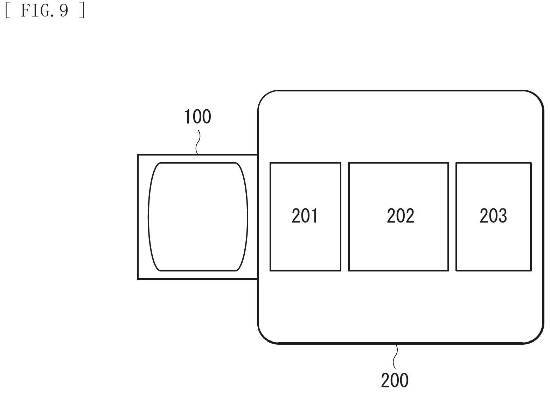

FIG. 9 illustrates a configuration example of the imaging apparatus to which the optical system according to an embodiment is applied. The imaging apparatus includes a lens unit 100 and a camera unit 200. The camera unit 200 includes a filter 201, an imaging element 202, and a transmission system 203.

The imaging element 202 is a solid-state imaging element such as a CCD (Charge Coupled Device) or a CMOS (Complementary Metal Oxide Semiconductor). The imaging element 202 converts an optical image formed by the lens unit 100 into an electric signal, to thereby output an imaging signal (an image signal) corresponding to the optical image. Any of the optical systems 1 to 3 according to the respective configuration examples illustrated in FIG. 1 and other drawings is applicable as the lens unit 100.

For example, when the imaging apparatus is used in a visible range, an IR (infrared) cut filter is used as the filter 201. The transmission system 203 transmits the image signal to allow the image signal to be outputted to the outside.

### <Examples>

### <4. Numerical Examples of Optical Systems>

Next, description is given of specific numerical examples of the optical system according to an embodiment of the present disclosure. Here, the description is given of Examples in which specific numerical values are applied to the optical systems 1 to 3 according to the respective configuration examples illustrated in FIG. 1 and other drawings.

It is to be noted that meanings and the like of respective symbols indicated in the following tables and descriptions are as follows. "Si" denotes a number of an i-th surface when a reference numeral is assigned to increase sequentially from a side closest to an object. "ri" denotes a value (mm) of a paraxial radius of curvature of the i-th surface. "di" denotes a value (mm) of an interval on the optical axis between the i-th surface and an (i + 1)-th surface. "ndi" denotes a value of a refractive index at the d-line (a wavelength of 587.6 nm) of a material of an optical element having the i-th surface. "νdi" denotes a value of an Abbe number at the d-line of the material of the optical element having the i-th surface. "φi" denotes a value (mm) of an effective diameter of the i-th surface. A portion where the value of "ri" is "∞" indicates a flat surface, an aperture stop surface, or the like. "ASP" in the column of a surface number (Si) indicates that the surface has an aspherical shape. "STO" in the column of the surface number indicates that an aperture stop St is disposed at the corresponding position. "IMG" in the column of the surface number indicates that the surface is an image plane. "f" denotes a focal length of a total system at the time of focusing at infinity (unit: mm). "Fno" denotes an open F-value (F-number). "ω" denotes a half angle of view, and "2ω" denotes a total angle of view (unit: °). "Y" denotes a maximum image height that determines a half angle of view (unit: mm). "L" denotes a total optical length (a distance on the optical axis from a surface on the side closest to the object to the image plane IMG) (unit: mm).

Further, some of the lenses to be used in each of Examples have a lens surface configured by an aspherical surface. It is to be noted that, in each of the tables illustrating aspheric coefficients described later, "E-i" denotes exponential notation with a base of 10, i.e., "10⁻ⁱ". For example, "0.12345E-05" denotes "0.12345 × 10⁻⁵".

The aspherical shape is defined by the following expression. Here, it is assumed that a traveling direction of light is positive, "X" is a distance (a sag amount) from a vertex of a lens surface in an optical axis direction, "H" is a height in a direction perpendicular to the optical axis Z1, "R" is a paraxial radius of curvature at a lens vertex, and "k" is a conic (conic) constant. A4, A6, A8, A10, A12, A14, and A16 are respectively fourth order, sixth order, eighth order, tenth order, twelfth order, fourteenth order, and sixteenth order aspheric coefficients.
<Math. 1> $\begin{matrix}X = \frac{{H}^{2} / R}{1 + \sqrt{1 - \left(1+k\right) {\left(H/R\right)}^{2}}} + A 4 {H}^{4} + A 6 {H}^{6} + A 8 {H}^{8} + A 10 {H}^{10} + A 12 {H}^{12} \\ + A 14 {H}^{14} + A 16 {H}^{16}\end{matrix}$ (B)

### <Example 1>

Table 1 illustrates basic lens data on the optical system 1 according to Example 1 illustrated in FIG. 1. Table 2 illustrates values of a focal length f of the total system, an F-value, a total angle of view 2ω, an image height Y, and a total optical length L in the optical system 1 according to Example 1. Table 2 also illustrates values of an object distance (a distance from a surface vertex closest to the object), a focal length of a first lens L11, and a focal length of a second lens L21. Table 3 illustrates values of coefficients indicating shapes of aspherical surfaces in the optical system 1 according to Example 1.

The optical system 1 according to Example 1 has a configuration in which the first lens unit G1, the second lens unit G2, the aperture stop St, and the third lens unit G3 are disposed in order from the object side toward the image plane side. Further, the optical member GC such as an optical filter is disposed on an image plane side of the third lens unit G3.

The first lens unit G1 has negative refractive power. The first lens unit G1 is a unit that includes the first lens L11 having refractive power on both surfaces. The first lens L11 is a negative lens having a biconcave shape.

The second lens unit G2 has positive refractive power. The second lens unit G2 has refractive power on only one surface (a surface on the object side). The second lens unit G2 is a unit that includes a substrate L20 and the second lens L21 disposed on an object side of the substrate L20 and having positive refractive power. The second lens L21 is a positive lens having a convex surface oriented on the object side, and has refractive power on only one surface (a surface on the object side). The substrate L20 is a glass substrate. The second lens L21 is configured by a molded resin disposed on the object side with respect to the substrate L20 as the glass substrate. The aperture stop St is formed on an image plane side of the substrate L20.

The third lens unit G3 has positive refractive power. The third lens unit G3 is a unit that includes a third lens L31 having refractive power on both surfaces. The third lens L31 is a positive lens having a biconvex shape.

The above-described configuration allows for achievement of an optical system that is easily reduced in size and has high optical performance.

**<Table 1>**

| Example 1 | | | | | |
|---|---|---|---|---|---|
| Si | ri | di | ndi | νdi | φi |
| 1 (ASP) | -4.732957 | 0.20 | 1.50149 | 80.00 | 2.25 |
| 2 (ASP) | 0.337316 | 0.33 | 1.00000 | | 1.15 |
| 3 (ASP) | 0.538158 | 0.38 | 1.61425 | 34.00 | 1.05 |
| 4 | ∞ | 0.35 | 1.52778 | 55.00 | 0.83 |
| 5 (STO) | ∞ | 0.10 | 1.00000 | | 0.32 |
| 6 (ASP) | 4.300786 | 0.47 | 1.50149 | 80.00 | 0.59 |
| 7 (ASP) | -0.493393 | 0.12 | 1.00000 | | 0.91 |
| 8 | ∞ | 0.70 | 1.52778 | 55.00 | 1.27 |
| 9 | ∞ | 0.35 | 1.50602 | 59.50 | 1.76 |
| 10 (IMG) | ∞ | 0.00 | 1.00000 | | |

**<Table 2>**

| Example 1 | |
|---|---|
| f (mm) | 0.59 |
| Fno | 2.80 |
| 2ω (°) | 120.00 |
| Y (mm) | 1.00 |
| L (mm) | 3.00 |
| Object Distance (mm) | 50.00 |
| f1 (mm) | -0.620 |
| f2 (mm) | 0.876 |

**<Table 3>**

| Example 1, Aspherical Data | | | | |
|---|---|---|---|---|
| Si | k | A4 | A6 | A8 |
| 1 | -1.000000E+01 | 3.103133E-01 | -2.901062E-01 | 1.135873E-01 |
| 2 | -7.360660E-01 | -2.290883E+00 | 7.144833E+00 | -8.622239E+00 |
| 3 | -7.324359E-01 | -1.223077E+00 | 6.827670E+00 | -2.627904E+01 |
| 6 | 7.554229E+00 | -1.368250E+00 | 2.250410E+01 | -1.982584E+02 |
| 7 | -8.775708E-01 | 5.378266E-01 | 6.935655E-02 | 5.918389E+00 |

| Si | A10 | A12 | A14 | A16 |
|---|---|---|---|---|
| 1 | 2.965595E-02 | -3.642383E-02 | 2.603644E-03 | 2.982927E-03 |
| 2 | -2.444045E+01 | 0 | 0 | 0 |
| 3 | 2.872139E+01 | 0 | 0 | 0 |
| 6 | 6.816840E+02 | 0 | 0 | 0 |
| 7 | 1.801010E+00 | 0 | 0 | 0 |

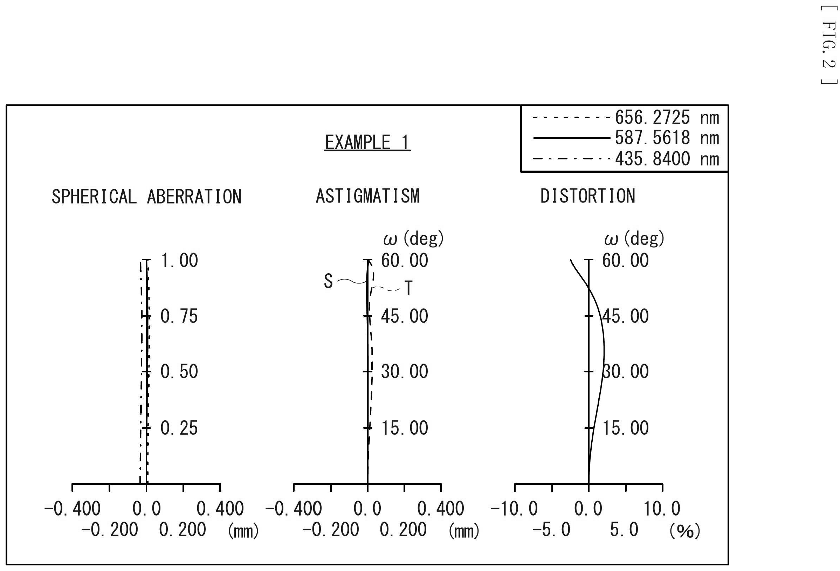

FIG. 2 illustrates longitudinal aberration at the time of focusing at an object distance of 50 mm in the optical system 1 according to Example 1. FIG. 2 illustrates spherical aberration, astigmatism (field curvature), and distortion as the longitudinal aberration. In the spherical aberration diagram, the solid line indicates a value at the d-line (587.56 nm), the dashed-dotted line indicates a value at a g-line (435.84 nm), and the broken line indicates a value at the C-line (656.27 nm). In the astigmatism diagram, S denotes a value on a sagittal image plane, and T denotes a value on a tangential (meridional) image plane. The astigmatism diagram and the distortion diagram illustrate values at the d-line.
These apply similarly to aberration diagrams in subsequent other Examples.

As is evident from each of the aberration diagrams, the optical system 1 according to Example 1 undergoes favorable correction of various aberrations, and thus has superior image-forming performance.

### <Example 2>

Table 4 illustrates basic lens data on the optical system 2 according to Example 2 illustrated in FIG. 3. Table 5 illustrates values of the focal length f of the total system, the F-value, the total angle of view 2ω, the image height Y, and the total optical length L in the optical system 2 according to Example 2. Table 5 also illustrates values of an object distance (a distance from the surface vertex closest to the object), a focal length of the first lens L11, and a focal length of the second lens L21. Table 6 illustrates values of coefficients indicating shapes of aspherical surfaces in the optical system 2 according to Example 2.

The optical system 2 according to Example 2 has a configuration in which the first lens unit G1, the second lens unit G2, the aperture stop St, and the third lens unit G3 are disposed in order from the object side toward the image plane side. Further, the optical member GC such as an optical filter is disposed on the image plane side of the third lens unit G3.

The first lens unit G1 has negative refractive power. The first lens unit G1 is a unit that includes the first lens L11 having refractive power on both surfaces. The first lens L11 is a negative lens having a biconcave shape.

The second lens unit G2 has positive refractive power. The second lens unit G2 has refractive power on only one surface (the surface on the object side). The second lens unit G2 is a unit that includes the substrate L20 and the second lens L21 disposed on the object side of the substrate L20 and having positive refractive power. The second lens L21 is a positive lens having a convex surface oriented on the object side, and has refractive power on only one surface (the surface on the object side). The substrate L20 is a glass substrate. The second lens L21 is configured by a molded resin disposed on the object side with respect to the substrate L20 as the glass substrate. The aperture stop St is formed on the image plane side of the substrate L20.

The third lens unit G3 has positive refractive power. The third lens unit G3 is a unit that includes the third lens L31 having refractive power on both surfaces. The third lens L31 is a positive lens having a biconvex shape.

The above-described configuration allows for achievement of an optical system that is easily reduced in size and has high optical performance.

**<Table 4>**

| Example 2 | | | | | |
|---|---|---|---|---|---|
| Si | ri | di | ndi | νdi | φi |
| 1 (ASP) | -7.757311 | 0.20 | 1.48191 | 60.00 | 2.22 |
| 2 (ASP) | 0.358775 | 0.33 | 1.00000 | | 1.25 |
| 3 (ASP) | 0.448197 | 0.50 | 1.59350 | 40.00 | 1.11 |
| 4 | ∞ | 0.35 | 1.52778 | 55.00 | 0.86 |
| 5 (STO) | ∞ | 0.19 | 1.00000 | | 0.36 |
| 6 (ASP) | 1.417165 | 0.48 | 1.48153 | 75.00 | 0.83 |
| 7 (ASP) | -1.209126 | 0.10 | 1.00000 | | 1.20 |
| 8 | ∞ | 0.50 | 1.52778 | 55.00 | 1.48 |
| 9 | ∞ | 0.35 | 1.50602 | 59.50 | 1.78 |
| 10 (IMG) | ∞ | 0.00 | 1.00000 | | |

**<Table 5>**

| Example 2 | |
|---|---|
| f (mm) | 0.81 |
| Fno | 2.80 |
| 2ω (°) | 100.00 |
| Y (mm) | 1.00 |
| L (mm) | 3.00 |
| Object Distance (mm) | 50.00 |
| f1 (mm) | -0.706 |
| f2 (mm) | 0.755 |

**<Table 6>**

| Example 2, Aspherical Data | | | | |
|---|---|---|---|---|
| Si | k | A4 | A6 | A8 |
| 1 | 1.000000E+01 | 3.230500E-01 | -3.322044E-01 | 1.537623E-01 |
| 2 | -7.322427E-01 | -1.389177E+00 | 3.441831E+00 | -3.354187E+00 |
| 3 | -5.424831E-01 | -1.016126E+00 | 2.209793E+00 | -7.086441E+00 |
| 6 | 1.442663E+00 | -1.939297E+00 | 9.551978E+00 | -4.301858E+01 |
| 7 | -8.930684E-01 | 4.461974E-01 | -2.735788E+00 | 8.309000E+00 |

| Si | A10 | A12 | A14 | A16 |
|---|---|---|---|---|
| 1 | 3.027416E-02 | -4.806789E-02 | -4.286763E-03 | 9.416728E-03 |
| 2 | -1.644337E+01 | 0 | 0 | 0 |
| 3 | -1.011579E+01 | 0 | 0 | 0 |
| 6 | 2.981919E+01 | 0 | 0 | 0 |
| 7 | -1.550988E+01 | 0 | 0 | 0 |

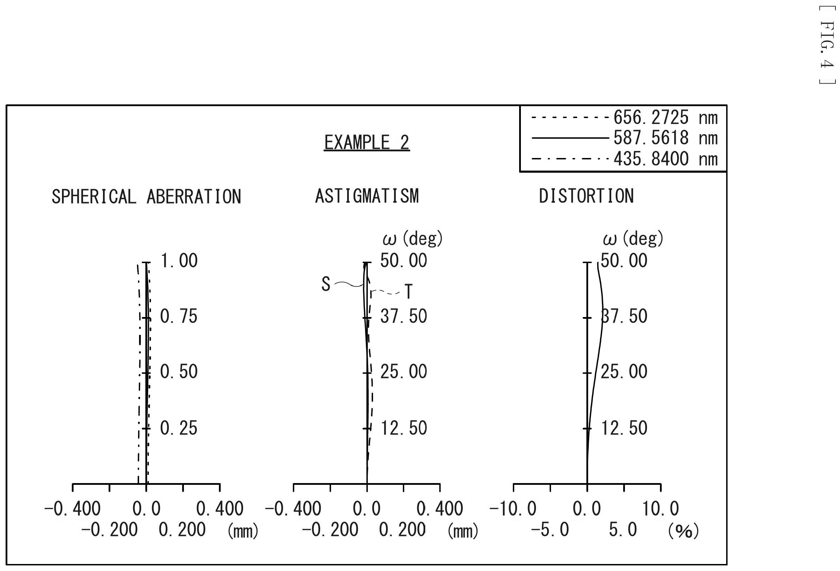

FIG. 4 illustrates longitudinal aberration at the time of focusing at an object distance of 50 mm in the optical system 2 according to Example 2. FIG. 4 illustrates spherical aberration, astigmatism (field curvature), and distortion as the longitudinal aberration.

As is evident from each of the aberration diagrams, the optical system 2 according to Example 2 undergoes favorable correction of various aberrations, and thus has superior image-forming performance.

### <Example 3>

Table 7 illustrates basic lens data on the optical system 3 according to Example 3 illustrated in FIG. 5. Table 8 illustrates values of the focal length f of the total system, the F-value, the total angle of view 2ω, the image height Y, and the total optical length L in the optical system 3 according to Example 3. Table 8 also illustrates values of an object distance (a distance from the surface vertex closest to the object), a focal length of the first lens L11, and a focal length of the second lens L21. Table 9 illustrates values of coefficients indicating shapes of aspherical surfaces in the optical system 3 according to Example 3.

The optical system 3 according to Example 3 has a configuration in which the first lens unit G1, the second lens unit G2, the aperture stop St, the third lens unit G3, and the fourth lens unit G4 are disposed in order from the object side toward the image plane side. Further, the optical member GC such as an optical filter is disposed on an image plane side of the fourth lens unit G4.

The first lens unit G1 has negative refractive power. The first lens unit G1 is a unit that includes the first lens L11 having refractive power on both surfaces. The first lens L11 is a negative lens having a biconcave shape.

The second lens unit G2 has positive refractive power. The second lens unit G2 has refractive power on only one surface (the surface on the object side). The second lens unit G2 is a unit that includes the substrate L20 and the second lens L21 disposed on the object side of the substrate L20 and having positive refractive power. The second lens L21 is a positive lens having a convex surface oriented on the object side, and has refractive power on only one surface (the surface on the object side). The substrate L20 is a glass substrate. The second lens L21 is configured by a molded resin disposed on the object side with respect to the substrate L20 as the glass substrate. The aperture stop St is formed on the image plane side of the substrate L20.

The third lens unit G3 has positive refractive power. The third lens unit G3 is a unit that includes the third lens L31 having refractive power on both surfaces. The third lens L31 is a positive lens having a biconvex shape.

The fourth lens unit G4 has positive refractive power. The fourth lens unit G4 has refractive power on only one surface (a surface on the object side). The fourth lens unit G4 is a unit that includes a substrate L40 and a fourth lens L41 disposed on an object side of the substrate L40 and having positive refractive power. The fourth lens L41 is a positive lens having a convex surface oriented on the object side, and has refractive power on only one surface (a surface on the object side). The substrate L40 is a glass substrate. The fourth lens L41 is configured by a molded resin disposed on the object side with respect to the substrate L40 as the glass substrate.

The above-described configuration allows for achievement of an optical system that is easily reduced in size and has high optical performance.

**<Table 7>**

| Example 3 | | | | | |
|---|---|---|---|---|---|
| Si | ri | di | ndi | νdi | φi |
| 1 (ASP) | -4.535954 | 0.20 | 1.51000 | 56.00 | 2.91 |
| 2 (ASP) | 0.341857 | 0.32 | 1.00000 | | 1.21 |
| 3 (ASP) | 0.548546 | 0.40 | 1.62000 | 24.00 | 1.09 |
| 4 | ∞ | 0.35 | 1.52550 | 55.00 | 0.83 |
| 5 (STO) | ∞ | 0.16 | 1.00000 | | 0.31 |
| 6 (ASP) | 1.958217 | 0.44 | 1.51000 | 56.00 | 0.08 |
| 7 (ASP) | -0.592968 | 0.05 | 1.00000 | | 1.02 |
| 8 (ASP) | 4.679077 | 0.40 | 1.48000 | 60.00 | 0.17 |
| 9 | ∞ | 0.30 | 1.52550 | 55.00 | 1.78 |
| 10 | ∞ | 0.35 | 1.50400 | 59.50 | 1.88 |
| 11 (IMG) | ∞ | 0.00 | 1.00000 | | |

**<Table 8>**

| Example 3 | |
|---|---|
| f (mm) | 0.57 |
| Fno | 2.80 |
| 2ω (°) | 120.00 |
| Y (mm) | 1.00 |
| L (mm) | 2.97 |
| Object Distance (mm) | 50.00 |
| f1 (mm) | -0.612 |
| f2 (mm) | 0.876 |

**<Table 9>**

| Example 3, Aspherical Data | | | | |
|---|---|---|---|---|
| Si | k | A4 | A6 | A8 |
| 1 | 1.254847E-01 | 3.082842E-01 | -2.745979E-01 | 1.080499E-01 |
| 2 | -7.393412E-01 | -2.330890E+00 | 6.995814E+00 | -1.259396E+01 |
| 3 | -7.161277E-01 | -1.198251E+00 | 6.177068E+00 | -2.651984E+01 |
| 6 | 2.631242E+00 | -2.617542E-01 | 7.760706E+00 | -3.301463E+01 |
| 7 | -1.215626E+00 | 9.573519E-01 | -5.710429E-01 | 2.130023E+01 |
| 8 | 2.069197E+01 | 9.591522E-02 | 9.662145E-02 | -2.031694E-02 |

| Si | A10 | A12 | A14 | A16 |
|---|---|---|---|---|
| 1 | 3.476200E-02 | -3.740978E-02 | -1.916312E-03 | 5.148761E-03 |
| 2 | -1.397368E+01 | 0 | 0 | 0 |
| 3 | 3.042959E+01 | 0 | 0 | 0 |
| 6 | 5.739842E+01 | 0 | 0 | 0 |
| 7 | -3.288265E+01 | 0 | 0 | 0 |
| 8 | -7.090713E-02 | 0 | 0 | 0 |

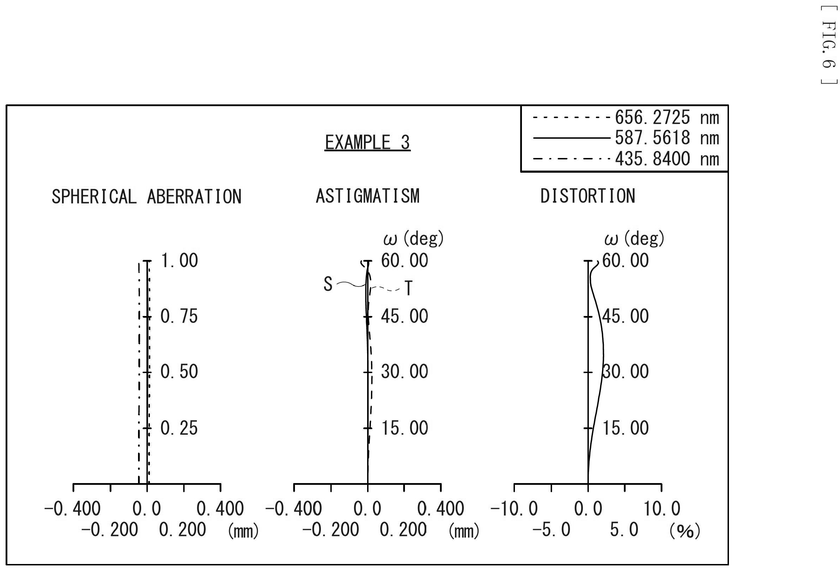

FIG. 6 illustrates longitudinal aberration at the time of focusing at an object distance of 50 mm in the optical system 3 according to Example 3. FIG. 6 illustrates spherical aberration, astigmatism (field curvature), and distortion as the longitudinal aberration.

As is evident from each of the aberration diagrams, the optical system 3 according to Example 3 undergoes favorable correction of various aberrations, and thus has superior image-forming performance.

### <Other Numerical Data of Each Example>

Table 10 summarizes values related to the above-described respective conditional expressions for each of Examples. As is evident from Table 10, the values of each of Examples fall within the respective numerical ranges for the conditional expressions.

**<Table 10>**

| Conditional Expression | | Example | | |
|---|---|---|---|---|
| | | 1 | 2 | 3 |
| (1) | ν2 | 34.0 | 40.0 | 24.0 |
| (2) | ν1 - ν2 | 46.0 | 20.0 | 32.0 |
| (3) | f1/f | -1.05 | -0.87 | -1.08 |
| (4) | f2/f | 1.49 | 0.93 | 1.55 |

### <5. Practical Application Examples>

### <5.1 First Practical Application Example>

The technique according to the present disclosure is applicable to various products. For example, the technique according to the present disclosure may be achieved as a device mounted on any type of mobile body such as a vehicle, an electric vehicle, a hybrid electric vehicle, a motorcycle, a bicycle, a personal mobility, an airplane, a drone, a vessel, a robot, a construction machine, or an agricultural machine (tractor).

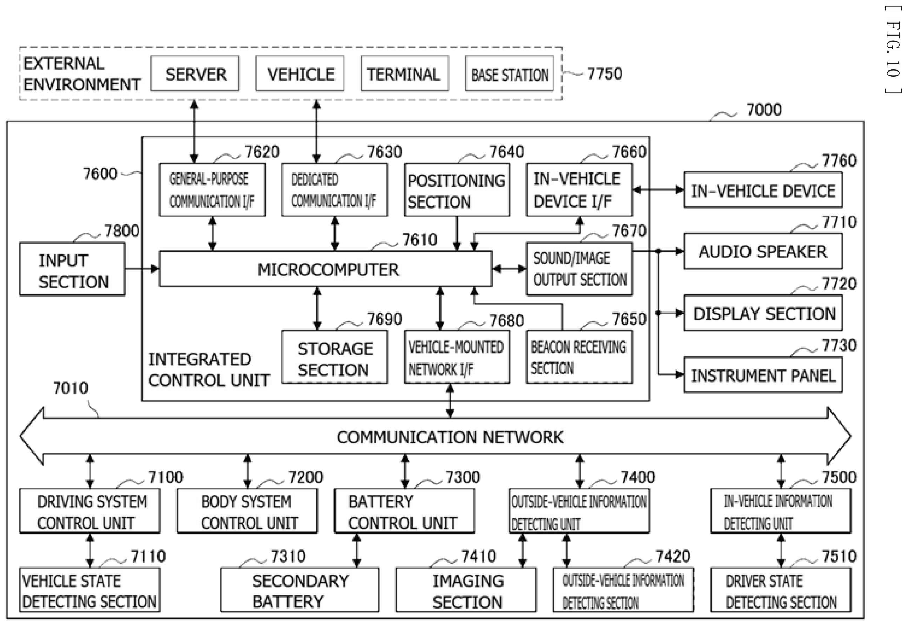

FIG. 10 is a block diagram depicting an example of schematic configuration of a vehicle control system 7000 as an example of a mobile body control system to which the technology according to an embodiment of the present disclosure can be applied. The vehicle control system 7000 includes a plurality of electronic control units connected to each other via a communication network 7010. In the example depicted in FIG. 10, the vehicle control system 7000 includes a driving system control unit 7100, a body system control unit 7200, a battery control unit 7300, an outside-vehicle information detecting unit 7400, an in-vehicle information detecting unit 7500, and an integrated control unit 7600. The communication network 7010 connecting the plurality of control units to each other may, for example, be a vehicle-mounted communication network compliant with an arbitrary standard such as controller area network (CAN), local interconnect network (LIN), local area network (LAN), FlexRay (registered trademark), or the like.

Each of the control units includes: a microcomputer that performs arithmetic processing according to various kinds of programs; a storage section that stores the programs executed by the microcomputer, parameters used for various kinds of operations, or the like; and a driving circuit that drives various kinds of control target devices. Each of the control units further includes: a network interface (I/F) for performing communication with other control units via the communication network 7010; and a communication I/F for performing communication with a device, a sensor, or the like within and without the vehicle by wire communication or radio communication. A functional configuration of the integrated control unit 7600 illustrated in FIG. 10 includes a microcomputer 7610, a general-purpose communication I/F 7620, a dedicated communication I/F 7630, a positioning section 7640, a beacon receiving section 7650, an in-vehicle device I/F 7660, a sound/image output section 7670, a vehicle-mounted network I/F 7680, and a storage section 7690. The other control units similarly include a microcomputer, a communication I/F, a storage section, and the like.

The driving system control unit 7100 controls the operation of devices related to the driving system of the vehicle in accordance with various kinds of programs. For example, the driving system control unit 7100 functions as a control device for a driving force generating device for generating the driving force of the vehicle, such as an internal combustion engine, a driving motor, or the like, a driving force transmitting mechanism for transmitting the driving force to wheels, a steering mechanism for adjusting the steering angle of the vehicle, a braking device for generating the braking force of the vehicle, and the like. The driving system control unit 7100 may have a function as a control device of an antilock brake system (ABS), electronic stability control (ESC), or the like.

The driving system control unit 7100 is connected with a vehicle state detecting section 7110. The vehicle state detecting section 7110, for example, includes at least one of a gyro sensor that detects the angular velocity of axial rotational movement of a vehicle body, an acceleration sensor that detects the acceleration of the vehicle, and sensors for detecting an amount of operation of an accelerator pedal, an amount of operation of a brake pedal, the steering angle of a steering wheel, an engine speed or the rotational speed of wheels, and the like. The driving system control unit 7100 performs arithmetic processing using a signal input from the vehicle state detecting section 7110, and controls the internal combustion engine, the driving motor, an electric power steering device, the brake device, and the like.

The body system control unit 7200 controls the operation of various kinds of devices provided to the vehicle body in accordance with various kinds of programs. For example, the body system control unit 7200 functions as a control device for a keyless entry system, a smart key system, a power window device, or various kinds of lamps such as a headlamp, a backup lamp, a brake lamp, a turn signal, a fog lamp, or the like. In this case, radio waves transmitted from a mobile device as an alternative to a key or signals of various kinds of switches can be input to the body system control unit 7200. The body system control unit 7200 receives these input radio waves or signals, and controls a door lock device, the power window device, the lamps, or the like of the vehicle.

The battery control unit 7300 controls a secondary battery 7310, which is a power supply source for the driving motor, in accordance with various kinds of programs. For example, the battery control unit 7300 is supplied with information about a battery temperature, a battery output voltage, an amount of charge remaining in the battery, or the like from a battery device including the secondary battery 7310. The battery control unit 7300 performs arithmetic processing using these signals, and performs control for regulating the temperature of the secondary battery 7310 or controls a cooling device provided to the battery device or the like.

The outside-vehicle information detecting unit 7400 detects information about the outside of the vehicle including the vehicle control system 7000. For example, the outside-vehicle information detecting unit 7400 is connected with at least one of an imaging section 7410 and an outside-vehicle information detecting section 7420. The imaging section 7410 includes at least one of a time-of-flight (ToF) camera, a stereo camera, a monocular camera, an infrared camera, and other cameras. The outside-vehicle information detecting section 7420, for example, includes at least one of an environmental sensor for detecting current atmospheric conditions or weather conditions and a peripheral information detecting sensor for detecting another vehicle, an obstacle, a pedestrian, or the like on the periphery of the vehicle including the vehicle control system 7000.

The environmental sensor, for example, may be at least one of a rain drop sensor detecting rain, a fog sensor detecting a fog, a sunshine sensor detecting a degree of sunshine, and a snow sensor detecting a snowfall. The peripheral information detecting sensor may be at least one of an ultrasonic sensor, a radar device, and a LIDAR device (Light detection and Ranging device, or Laser imaging detection and ranging device). Each of the imaging section 7410 and the outside-vehicle information detecting section 7420 may be provided as an independent sensor or device, or may be provided as a device in which a plurality of sensors or devices are integrated.

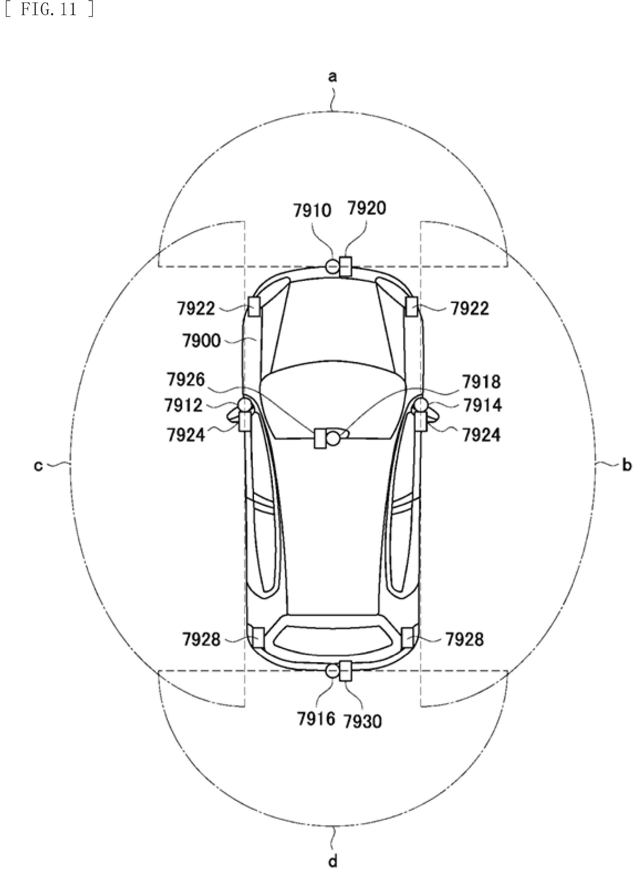

FIG. 11 depicts an example of installation positions of the imaging section 7410 and the outside-vehicle information detecting section 7420. Imaging sections 7910, 7912, 7914, 7916, and 7918 are, for example, disposed at at least one of positions on a front nose, sideview mirrors, a rear bumper, and a back door of the vehicle 7900 and a position on an upper portion of a windshield within the interior of the vehicle. The imaging section 7910 provided to the front nose and the imaging section 7918 provided to the upper portion of the windshield within the interior of the vehicle obtain mainly an image of the front of the vehicle 7900. The imaging sections 7912 and 7914 provided to the sideview mirrors obtain mainly an image of the sides of the vehicle 7900. The imaging section 7916 provided to the rear bumper or the back door obtains mainly an image of the rear of the vehicle 7900. The imaging section 7918 provided to the upper portion of the windshield within the interior of the vehicle is used mainly to detect a preceding vehicle, a pedestrian, an obstacle, a signal, a traffic sign, a lane, or the like.

Incidentally, FIG. 11 depicts an example of photographing ranges of the respective imaging sections 7910, 7912, 7914, and 7916. An imaging range a represents the imaging range of the imaging section 7910 provided to the front nose. Imaging ranges b and c respectively represent the imaging ranges of the imaging sections 7912 and 7914 provided to the sideview mirrors. An imaging range d represents the imaging range of the imaging section 7916 provided to the rear bumper or the back door. A bird's-eye image of the vehicle 7900 as viewed from above can be obtained by superimposing image data imaged by the imaging sections 7910, 7912, 7914, and 7916, for example.

Outside-vehicle information detecting sections 7920, 7922, 7924, 7926, 7928, and 7930 provided to the front, rear, sides, and corners of the vehicle 7900 and the upper portion of the windshield within the interior of the vehicle may be, for example, an ultrasonic sensor or a radar device. The outside-vehicle information detecting sections 7920, 7926, and 7930 provided to the front nose of the vehicle 7900, the rear bumper, the back door of the vehicle 7900, and the upper portion of the windshield within the interior of the vehicle may be a LIDAR device, for example. These outside-vehicle information detecting sections 7920 to 7930 are used mainly to detect a preceding vehicle, a pedestrian, an obstacle, or the like.

Returning to FIG. 10, the description will be continued. The outside-vehicle information detecting unit 7400 makes the imaging section 7410 image an image of the outside of the vehicle, and receives imaged image data. In addition, the outside-vehicle information detecting unit 7400 receives detection information from the outside-vehicle information detecting section 7420 connected to the outside-vehicle information detecting unit 7400. In a case where the outside-vehicle information detecting section 7420 is an ultrasonic sensor, a radar device, or a LIDAR device, the outside-vehicle information detecting unit 7400 transmits an ultrasonic wave, an electromagnetic wave, or the like, and receives information of a received reflected wave. On the basis of the received information, the outside-vehicle information detecting unit 7400 may perform processing of detecting an object such as a human, a vehicle, an obstacle, a sign, a character on a road surface, or the like, or processing of detecting a distance thereto. The outside-vehicle information detecting unit 7400 may perform environment recognition processing of recognizing a rainfall, a fog, road surface conditions, or the like on the basis of the received information. The outside-vehicle information detecting unit 7400 may calculate a distance to an object outside the vehicle on the basis of the received information.

In addition, on the basis of the received image data, the outside-vehicle information detecting unit 7400 may perform image recognition processing of recognizing a human, a vehicle, an obstacle, a sign, a character on a road surface, or the like, or processing of detecting a distance thereto. The outside-vehicle information detecting unit 7400 may subject the received image data to processing such as distortion correction, alignment, or the like, and combine the image data imaged by a plurality of different imaging sections 7410 to generate a bird's-eye image or a panoramic image. The outside-vehicle information detecting unit 7400 may perform viewpoint conversion processing using the image data imaged by the imaging section 7410 including the different imaging parts.

The in-vehicle information detecting unit 7500 detects information about the inside of the vehicle. The in-vehicle information detecting unit 7500 is, for example, connected with a driver state detecting section 7510 that detects the state of a driver. The driver state detecting section 7510 may include a camera that images the driver, a biosensor that detects biological information of the driver, a microphone that collects sound within the interior of the vehicle, or the like. The biosensor is, for example, disposed in a seat surface, the steering wheel, or the like, and detects biological information of an occupant sitting in a seat or the driver holding the steering wheel. On the basis of detection information input from the driver state detecting section 7510, the in-vehicle information detecting unit 7500 may calculate a degree of fatigue of the driver or a degree of concentration of the driver, or may determine whether the driver is dozing. The in-vehicle information detecting unit 7500 may subject an audio signal obtained by the collection of the sound to processing such as noise canceling processing or the like.

The integrated control unit 7600 controls general operation within the vehicle control system 7000 in accordance with various kinds of programs. The integrated control unit 7600 is connected with an input section 7800. The input section 7800 is implemented by a device capable of input operation by an occupant, such, for example, as a touch panel, a button, a microphone, a switch, a lever, or the like. The integrated control unit 7600 may be supplied with data obtained by voice recognition of voice input through the microphone. The input section 7800 may, for example, be a remote control device using infrared rays or other radio waves, or an external connecting device such as a mobile telephone, a personal digital assistant (PDA), or the like that supports operation of the vehicle control system 7000. The input section 7800 may be, for example, a camera. In that case, an occupant can input information by gesture. Alternatively, data may be input which is obtained by detecting the movement of a wearable device that an occupant wears. Further, the input section 7800 may, for example, include an input control circuit or the like that generates an input signal on the basis of information input by an occupant or the like using the above-described input section 7800, and which outputs the generated input signal to the integrated control unit 7600. An occupant or the like inputs various kinds of data or gives an instruction for processing operation to the vehicle control system 7000 by operating the input section 7800.

The storage section 7690 may include a read only memory (ROM) that stores various kinds of programs executed by the microcomputer and a random access memory (RAM) that stores various kinds of parameters, operation results, sensor values, or the like. In addition, the storage section 7690 may be implemented by a magnetic storage device such as a hard disc drive (HDD) or the like, a semiconductor storage device, an optical storage device, a magneto-optical storage device, or the like.

The general-purpose communication I/F 7620 is a communication I/F used widely, which communication I/F mediates communication with various apparatuses present in an external environment 7750. The general-purpose communication I/F 7620 may implement a cellular communication protocol such as global system for mobile communications (GSM (registered trademark)), worldwide interoperability for microwave access (WiMAX (registered trademark)), long term evolution (LTE (registered trademark)), LTE-advanced (LTE-A), or the like, or another wireless communication protocol such as wireless LAN (referred to also as wireless fidelity (Wi-Fi (registered trademark)), Bluetooth (registered trademark), or the like. The general-purpose communication I/F 7620 may, for example, connect to an apparatus (for example, an application server or a control server) present on an external network (for example, the Internet, a cloud network, or a company-specific network) via a base station or an access point. In addition, the general-purpose communication I/F 7620 may connect to a terminal present in the vicinity of the vehicle (which terminal is, for example, a terminal of the driver, a pedestrian, or a store, or a machine type communication (MTC) terminal) using a peer to peer (P2P) technology, for example.

The dedicated communication I/F 7630 is a communication I/F that supports a communication protocol developed for use in vehicles. The dedicated communication I/F 7630 may implement a standard protocol such, for example, as wireless access in vehicle environment (WAVE), which is a combination of institute of electrical and electronic engineers (IEEE) 802.11p as a lower layer and IEEE 1609 as a higher layer, dedicated short range communications (DSRC), or a cellular communication protocol. The dedicated communication I/F 7630 typically carries out V2X communication as a concept including one or more of communication between a vehicle and a vehicle (Vehicle to Vehicle), communication between a road and a vehicle (Vehicle to Infrastructure), communication between a vehicle and a home (Vehicle to Home), and communication between a pedestrian and a vehicle (Vehicle to Pedestrian).

The positioning section 7640, for example, performs positioning by receiving a global navigation satellite system (GNSS) signal from a GNSS satellite (for example, a GPS signal from a global positioning system (GPS) satellite), and generates positional information including the latitude, longitude, and altitude of the vehicle. Incidentally, the positioning section 7640 may identify a current position by exchanging signals with a wireless access point, or may obtain the positional information from a terminal such as a mobile telephone, a personal handyphone system (PHS), or a smart phone that has a positioning function.

The beacon receiving section 7650, for example, receives a radio wave or an electromagnetic wave transmitted from a radio station installed on a road or the like, and thereby obtains information about the current position, congestion, a closed road, a necessary time, or the like. Incidentally, the function of the beacon receiving section 7650 may be included in the dedicated communication I/F 7630 described above.

The in-vehicle device I/F 7660 is a communication interface that mediates connection between the microcomputer 7610 and various in-vehicle devices 7760 present within the vehicle. The in-vehicle device I/F 7660 may establish wireless connection using a wireless communication protocol such as wireless LAN, Bluetooth (registered trademark), near field communication (NFC), or wireless universal serial bus (WUSB). In addition, the in-vehicle device I/F 7660 may establish wired connection by universal serial bus (USB), high-definition multimedia interface (HDMI (registered trademark)), mobile high-definition link (MHL), or the like via a connection terminal (and a cable if necessary) not depicted in the figures. The in-vehicle devices 7760 may, for example, include at least one of a mobile device and a wearable device possessed by an occupant and an information device carried into or attached to the vehicle. The in-vehicle devices 7760 may also include a navigation device that searches for a path to an arbitrary destination. The in-vehicle device I/F 7660 exchanges control signals or data signals with these in-vehicle devices 7760.

The vehicle-mounted network I/F 7680 is an interface that mediates communication between the microcomputer 7610 and the communication network 7010. The vehicle-mounted network I/F 7680 transmits and receives signals or the like in conformity with a predetermined protocol supported by the communication network 7010.

The microcomputer 7610 of the integrated control unit 7600 controls the vehicle control system 7000 in accordance with various kinds of programs on the basis of information obtained via at least one of the general-purpose communication I/F 7620, the dedicated communication I/F 7630, the positioning section 7640, the beacon receiving section 7650, the in-vehicle device I/F 7660, and the vehicle-mounted network I/F 7680. For example, the microcomputer 7610 may calculate a control target value for the driving force generating device, the steering mechanism, or the braking device on the basis of the obtained information about the inside and outside of the vehicle, and output a control command to the driving system control unit 7100. For example, the microcomputer 7610 may perform cooperative control intended to implement functions of an advanced driver assistance system (ADAS) which functions include collision avoidance or shock mitigation for the vehicle, following driving based on a following distance, vehicle speed maintaining driving, a warning of collision of the vehicle, a warning of deviation of the vehicle from a lane, or the like. In addition, the microcomputer 7610 may perform cooperative control intended for automated driving, which makes the vehicle to travel automatedly without depending on the operation of the driver, or the like, by controlling the driving force generating device, the steering mechanism, the braking device, or the like on the basis of the obtained information about the surroundings of the vehicle.

The microcomputer 7610 may generate three-dimensional distance information between the vehicle and an object such as a surrounding structure, a person, or the like, and generate local map information including information about the surroundings of the current position of the vehicle, on the basis of information obtained via at least one of the general-purpose communication I/F 7620, the dedicated communication I/F 7630, the positioning section 7640, the beacon receiving section 7650, the in-vehicle device I/F 7660, and the vehicle-mounted network I/F 7680. In addition, the microcomputer 7610 may predict danger such as collision of the vehicle, approaching of a pedestrian or the like, an entry to a closed road, or the like on the basis of the obtained information, and generate a warning signal. The warning signal may, for example, be a signal for producing a warning sound or lighting a warning lamp.

The sound/image output section 7670 transmits an output signal of at least one of a sound and an image to an output device capable of visually or auditorily notifying information to an occupant of the vehicle or the outside of the vehicle. In the example of FIG. 10, an audio speaker 7710, a display section 7720, and an instrument panel 7730 are illustrated as the output device. The display section 7720 may, for example, include at least one of an on-board display and a head-up display. The display section 7720 may have an augmented reality (AR) display function. The output device may be other than these devices, and may be another device such as headphones, a wearable device such as an eyeglass type display worn by an occupant or the like, a projector, a lamp, or the like. In a case where the output device is a display device, the display device visually displays results obtained by various kinds of processing performed by the microcomputer 7610 or information received from another control unit in various forms such as text, an image, a table, a graph, or the like. In addition, in a case where the output device is an audio output device, the audio output device converts an audio signal constituted of reproduced audio data or sound data or the like into an analog signal, and auditorily outputs the analog signal.

Incidentally, at least two control units connected to each other via the communication network 7010 in the example depicted in FIG. 10 may be integrated into one control unit. Alternatively, each individual control unit may include a plurality of control units. Further, the vehicle control system 7000 may include another control unit not depicted in the figures. In addition, part or the whole of the functions performed by one of the control units in the above description may be assigned to another control unit. That is, predetermined arithmetic processing may be performed by any of the control units as long as information is transmitted and received via the communication network 7010. Similarly, a sensor or a device connected to one of the control units may be connected to another control unit, and a plurality of control units may mutually transmit and receive detection information via the communication network 7010.

In the vehicle control system 7000 described above, the optical system and the imaging apparatus of the present disclosure are applicable to any of the imaging section 7410 and the imaging sections 7910, 7912, 7914, 7916, and 7918.

### <5.2 Second Practical Application Example>

The technique according to the present disclosure is applicable to a medical imaging system. The medical imaging system is a medical system using an imaging technology, and is, for example, an endoscope system or a microscope system.

### [Endoscope system]

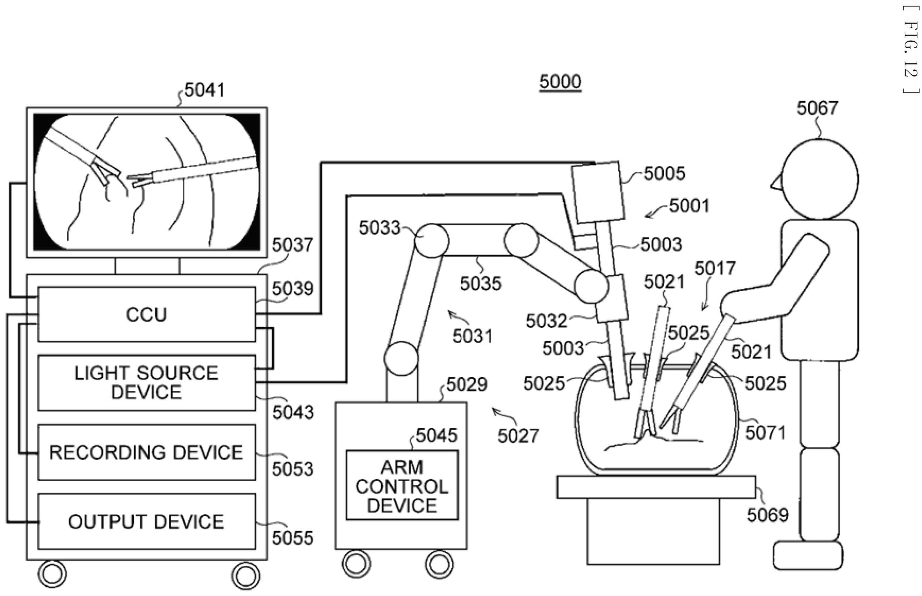

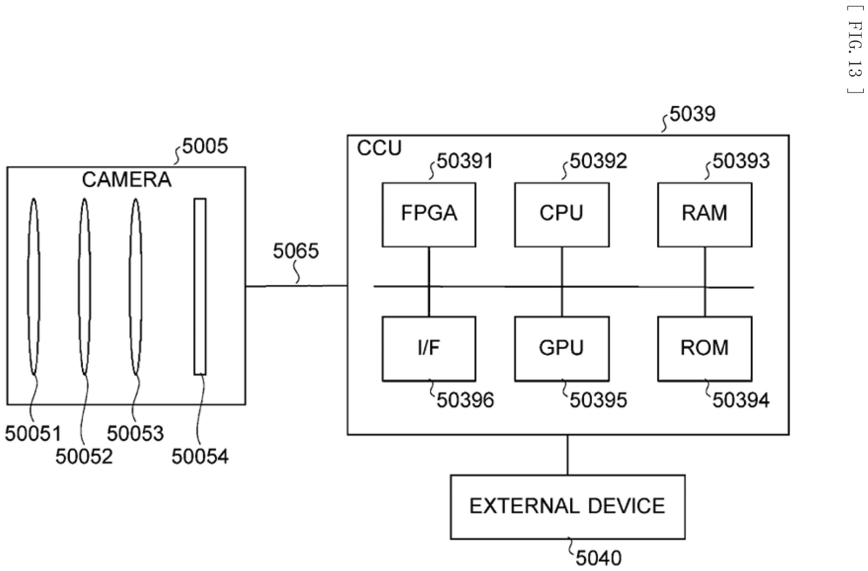

An example of the endoscope system will be described using FIGS. 12 and 13. FIG. 12 is a diagram illustrating an example of a schematic configuration of an endoscope system 5000 to which the technology according to the present disclosure is applicable. FIG. 13 is a diagram illustrating an example of a configuration of an endoscope 5001 and a camera control unit (CCU) 5039. FIG. 12 illustrates a situation where an operator (for example, a doctor) 5067 who is a participant of an operation performs the operation on a patient 5071 on a patient bed 5069 using the endoscope system 5000. As illustrated in FIG. 12, the endoscope system 5000 includes the endoscope 5001 that is a medical imaging device, the CCU 5039, a light source device 5043, a recording device 5053, an output device 5055, and a support device 5027 for supporting the endoscope 5001.

In endoscopic surgery, insertion assisting tools called trocars 5025 are punctured into the patient 5071. Then, a scope 5003 connected to the endoscope 5001 and surgical tools 5021 are inserted into a body of the patient 5071 through the trocars 5025. The surgical tools 5021 include: an energy device such as an electric scalpel; and forceps, for example.

A surgical image that is a medical image in which the inside of the body of the patient 5071 is captured by the endoscope 5001 is displayed on a display device 5041. The operator 5067 performs a procedure on a surgical target using the surgical tools 5021 while viewing the surgical image displayed on the display device 5041. The medical image is not limited to the surgical image, and may be a diagnostic image captured during diagnosis.

### [Endoscope]

The endoscope 5001 is an imaging section for capturing the inside of the body of the patient 5071, and is, for example, as illustrated in FIG. 13, a camera including a condensing optical system 50051 for condensing incident light, a zooming optical system 50052 capable of optical zooming by changing a focal length of the imaging section, a focusing optical system 50053 capable of focus adjustment by changing the focal length of the imaging section, and a light receiving sensor 50054. The endoscope 5001 condenses the light through the connected scope 5003 on the light receiving sensor 50054 to generate a pixel signal, and outputs the pixel signal through a transmission system to the CCU 5039. The scope 5003 is an insertion part that includes an objective lens at a distal end and guides the light from the connected light source device 5043 into the body of the patient 5071. The scope 5003 is, for example, a rigid scope for a rigid endoscope and a flexible scope for a flexible endoscope. The scope 5003 may be a direct viewing scope or an oblique viewing scope. The pixel signal only needs to be a signal based on a signal output from a pixel, and is, for example, a raw signal or an image signal. The transmission system connecting the endoscope 5001 to the CCU 5039 may include a memory, and the memory may store parameters related to the endoscope 5001 and the CCU 5039. The memory may be disposed at a connection portion of the transmission system or on a cable. For example, the memory of the transmission system may store the parameters before shipment of the endoscope 5001 or the parameters changed when current is applied, and an operation of the endoscope may be changed based on the parameters read from the memory. A set of the camera and the transmission system may be referred to as an endoscope. The light receiving sensor 50054 is a sensor for converting the received light into the pixel signal, and is, for example, a complementary metal-oxide-semiconductor (CMOS) imaging sensor. The light receiving sensor 50054 is preferably an imaging sensor having a Bayer array capable of color imaging. The light receiving sensor 50054 is also preferably an imaging sensor having a number of pixels corresponding to a resolution of, for example, 4K (3840 horizontal pixels × 2160 vertical pixels), 8K (7680 horizontal pixels × 4320 vertical pixels), or square 4K (3840 or more horizontal pixels × 3840 or more vertical pixels). The light receiving sensor 50054 may be one sensor chip, or a plurality of sensor chips. For example, a prism may be provided to separate the incident light into predetermined wavelength bands, and the wavelength bands may be imaged by different light receiving sensors. A plurality of light receiving sensors may be provided for stereoscopic viewing. The light receiving sensor 50054 may be a sensor having a chip structure including an arithmetic processing circuit for image processing, or may be a sensor for time of flight (ToF). The transmission system is, for example, an optical fiber cable system or a wireless transmission system. The wireless transmission only needs to be capable of transmitting the pixel signal generated by the endoscope 5001, and, for example, the endoscope 5001 may be wirelessly connected to the CCU 5039, or the endoscope 5001 may be connected to the CCU 5039 via a base station in an operating room. At this time, the endoscope 5001 may transmit not only the pixel signal, but also simultaneously information (for example, a processing priority of the pixel signal and/or a synchronization signal) related to the pixel signal. In the endoscope, the scope may be integrated with the camera, and the light receiving sensor may be provided at the distal end of the scope.

### [Camera control unit (CCU)]

The CCU 5039 is a control device for controlling the endoscope 5001 and the light source device 5043 connected to the CCU 5039 in an integrated manner, and is, for example, as illustrated in FIG. 13, an image processing device including a field-programmable gate array (FPGA) 50391, a central processing unit (CPU) 50392, a random access memory 50393, a read-only memory (ROM) 50394, a graphics processing unit (GPU) 50395, and an interface (I/F) 50396. The CCU 5039 may control the display device 5041, the recording device 5053, and the output device 5055 connected to the CCU 5039 in an integrated manner. The CCU 5039 controls, for example, irradiation timing, irradiation intensity, and a type of an irradiation light source of the light source device 5043. The CCU 5039 also performs image processing, such as development processing (for example, demosaic processing) and correction processing, on the pixel signal output from the endoscope 5001, and outputs the processed image signal (for example, an image) to an external device such as the display device 5041. The CCU 5039 also transmits a control signal to the endoscope 5001 to control driving of the endoscope 5001. The control signal is information on an imaging condition such as a magnification or the focal length of the imaging section. The CCU 5039 may have a function to down-convert the image, and may be configured to be capable of simultaneously outputting a higher-resolution (for example, 4K) image to the display device 5041 and a lower-resolution (for example, high-definition (HD)) image to the recording device 5053.

The CCU 5039 may be connected to external equipment (such as a recording device, a display device, an output device, and a support device) via an IP converter for converting the signal into a predetermined communication protocol (such as the Internet Protocol (IP)). The connection between the IP converter and the external equipment may be established using a wired network, or a part or the whole of the network may be established using a wireless network. For example, the IP converter on the CCU 5039 side may have a wireless communication function, and may transmit the received image to an IP switcher or an output side IP converter via a wireless communication network, such as the fifth-generation mobile communication system (5G) or the sixth-generation mobile communication system (6G).

### [Light source device]

The light source device 5043 is a device capable of emitting the light having predetermined wavelength bands, and includes, for example, a plurality of light sources and a light source optical system for guiding the light of the light sources. The light sources are, for example, xenon lamps, light-emitting diode (LED) light sources, or laser diode (LD) light sources. The light source device 5043 includes, for example, the LED light sources corresponding to three respective primary colors of red (R), green (G), and blue (B), and controls output intensity and output timing of each of the light sources to emit white light. The light source device 5043 may include a light source capable of emitting special light used for special light observation, in addition to the light sources for emitting normal light for normal light observation. The special light is light having a predetermined wavelength band different from that of the normal light being light for the normal light observation, and is, for example, near-infrared light (light having a wavelength of 760 nm or longer), infrared light, blue light, or ultraviolet light. The normal light is, for example, the white light or green light. In narrow band imaging that is a kind of special light observation, blue light and green light are alternately emitted, and thus the narrow band imaging can image a predetermined tissue such as a blood vessel in a mucosal surface at high contrast using wavelength dependence of light absorption in the tissue of the body. In fluorescence observation that is a kind of special light observation, excitation light is emitted for exciting an agent injected into the tissue of the body, and fluorescence emitted by the tissue of the body or the agent as a label is received to obtain a fluorescent image, and thus the fluorescence observation can facilitate the operator to view, for example, the tissue of the body that is difficult to be viewed by the operator with the normal light. For example, in fluorescence observation using the infrared light, the infrared light having an excitation wavelength band is emitted to an agent, such as indocyanine green (ICG), injected into the tissue of the body, and the fluorescence light from the agent is received, whereby the fluorescence observation can facilitate viewing of a structure and an affected part of the tissue of the body. In the fluorescence observation, an agent (such as 5-aminolevulinic acid (5-ALA)) may be used that emits fluorescence in a red wavelength band by being excited by the special light in a blue wavelength band. The type of the irradiation light of the light source device 5043 is set by control of the CCU 5039. The CCU 5039 may have a mode of controlling the light source device 5043 and the endoscope 5001 to alternately perform the normal light observation and the special light observation. At this time, information based on a pixel signal obtained by the special light observation is preferably superimposed on a pixel signal obtained by the normal light observation. The special light observation may be an infrared light observation to observe a site inside the surface of an organ and a multi-spectrum observation utilizing hyperspectral spectroscopy. A photodynamic therapy may be incorporated.

### [Recording device]

The recording device 5053 is a device for recording the pixel signal (for example, an image) acquired from the CCU 5039, and is, for example, a recorder. The recording device 5053 records an image acquired from the CCU 5039 in a hard disk drive (HDD), a Super Density Disc (SDD), and/or an optical disc. The recording device 5053 may be connected to a network in a hospital to be accessible from equipment outside the operating room. The recording device 5053 may have a down-convert function or an up-convert function.

### [Display device]

The display device 5041 is a device capable of displaying the image, and is, for example, a display monitor. The display device 5041 displays a display image based on the pixel signal acquired from the CCU 5039. The display device 5041 may include a camera and a microphone to function as an input device that allows instruction input through gaze recognition, voice recognition, and gesture.

### [Output device]

The output device 5055 is a device for outputting the information acquired from the CCU 5039, and is, for example, a printer. The output device 5055 prints, for example, a print image based on the pixel signal acquired from the CCU 5039 on a sheet of paper.

### [Support device]

The support device 5027 is an articulated arm including a base 5029 including an arm control device 5045, an arm 5031 extending from the base 5029, and a holding part 5032 mounted at a distal end of the arm 5031. The arm control device 5045 includes a processor such as a CPU, and operates according to a predetermined computer program to control driving of the arm 5031. The support device 5027 uses the arm control device 5045 to control parameters including, for example, lengths of links 5035 constituting the arm 5031 and rotation angles and torque of joints 5033 so as to control, for example, the position and attitude of the endoscope 5001 held by the holding part 5032. This control can change the position or attitude of the endoscope 5001 to a desired position or attitude, makes it possible to insert the scope 5003 into the patient 5071, and can change the observed area in the body. The support device 5027 functions as an endoscope support arm for supporting the endoscope 5001 during the operation. Thus, the support device 5027 can play a role of a scopist who is an assistant holding the endoscope 5001. The support device 5027 may be a device for holding a microscope device 5301 to be described later, and can be called a medical support arm. The support device 5027 may be controlled using an autonomous control method by the arm control device 5045, or may be controlled using a control method in which the arm control device 5045 performs the control based on input of a user. The control method may be, for example, a master-slave method in which the support device 5027 serving as a slave device (replica device) that is a patient cart is controlled based on a movement of a master device (primary device) that is an operator console at a hand of the user. The support device 5027 may be remotely controllable from outside the operating room.

The example of the endoscope system 5000 to which the technology according to the present disclosure is applicable has been described above. For example, the technology according to the present disclosure may be applied to a microscope system.

### [Microscope system]

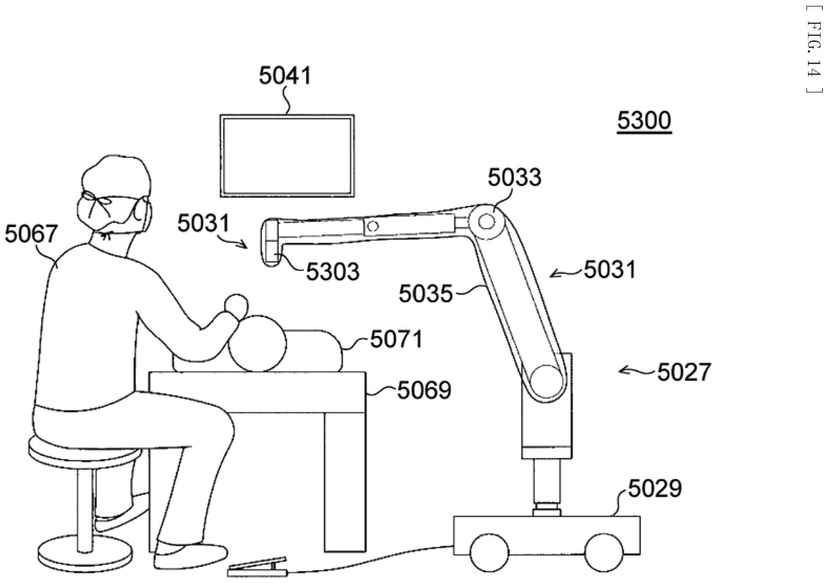

FIG. 14 is a diagram illustrating an example of a schematic configuration of a microscopic surgery system to which the technology according to the present disclosure is applicable. In the following description, the same components as those of the endoscope system 5000 will be denoted by the same reference numerals, and the description thereof will not be repeated.

FIG. 14 schematically illustrates a situation where the operator 5067 performs an operation on the patient 5071 on the patient bed 5069 using a microscopic surgery system 5300. For the sake of simplicity, FIG. 14 does not illustrate a cart 5037 among the components of the microscopic surgery system 5300, and illustrates the microscope device 5301 instead of the endoscope 5001 in a simplified manner. The microscope device 5301 may refer to a microscope 5303 provided at the distal end of the links 5035, or may refer to the overall configuration including the microscope 5303 and the support device 5027.

As illustrated in FIG. 14, during the operation, the microscopic surgery system 5300 is used to display an image of a surgical site captured by the microscope device 5301 in a magnified manner on the display device 5041 installed in the operating room. The display device 5041 is installed in a position facing the operator 5067, and the operator 5067 performs various procedures, such as excision of an affected part, on the surgical site while observing the state of the surgical site using the image displayed on the display device 5041. The microscopic surgery system is used in, for example, ophthalmic operation and neurosurgical operation.

The respective examples of the endoscope system 5000 and the microscopic surgery system 5300 to which the technology according to the present disclosure is applicable have been described above. Systems to which the technology according to the present disclosure is applicable are not limited to such examples. For example, the support device 5027 can support, at the distal end thereof, another observation device or another surgical tool instead of the endoscope 5001 or the microscope 5303. Examples of the other applicable observation device include forceps, tweezers, a pneumoperitoneum tube for pneumoperitoneum, and an energy treatment tool for incising a tissue or sealing a blood vessel by cauterization. By using the support device to support the observation device or the surgical tool described above, the position thereof can be more stably fixed and the load of the medical staff can be lower than in a case where the medical staff manually supports the observation device or the surgical tool. The technology according to the present disclosure may be applied to a support device for supporting such a component other than the microscope.

The technique according to the present disclosure is suitably applicable to the camera 5005 among the configurations described above. In particular, the optical system of the present disclosure is suitably applicable to at least some of the optical systems of the condensing optical system 50051, the zooming optical system 50052, and the focusing optical system 50053 in the camera 5005.

### <6. Other Embodiments>

The technique according to the present disclosure is not limited to the descriptions of the foregoing embodiments and Examples, and may be modified and worked in a wide variety of ways.

For example, the shapes and numerical values of the respective parts described in the foregoing embodiments and Examples are each a mere example for implementing the present technology, and the technical scope of the present technology should not be construed as being limited by these examples.

Further, for example, a configuration may be used that includes lenses in a number different from the number of lenses described in the foregoing embodiments and Examples. Furthermore, a configuration may be used that further includes a lens having substantially no refractive power. Here, the lens having substantially no refractive power is a lens having no such refractive power as to influence, in principle, optical performance achieved by an optical system, and is a lens in the form of a flat plate, for example.

For example, the present technology may also have the following configurations.

According to the present technology having the following configurations, configurations of the plurality of lens units are optimized to enable easy size reduction and high optical performance.

It is thus possible to provide an optical system that is easily reduced in size and has high optical performance, and an imaging apparatus including such an optical system.
[1] An optical system including
   a plurality of lens units including a first lens unit, a second lens unit, and a third lens unit in order from an object side toward an image plane side, in which
   the optical system includes, as the plurality of lens units,
      at least one or more units that each include a lens having refractive power on both surfaces, and
      at least one or more units that each include a substrate and a lens disposed on the substrate and having refractive power.
[2] The optical system according to [1], in which
   the first lens unit has negative refractive power, and
   the third lens unit has positive refractive power.
[3] The optical system according to [1] or [2], in which the second lens unit has positive refractive power.
[4] The optical system according to any one of [1] to [3], in which the second lens unit includes the substrate and a lens disposed on an object side of the substrate and having positive refractive power.
[5] The optical system according to any one of [1] to [4], in which
   the second lens unit includes a second lens, and
   a conditional expression below is satisfied: $10 < ν 2 < 60$ (1)
   where
   ν2 denotes an Abbe number of the second lens.
[6] The optical system according to any one of [1] to [5], in which
   the first lens unit includes a first lens,
   the second lens unit includes a second lens, and
   a conditional expression below is satisfied: $10 < ν 1 - ν 2 < 60$ (2)
   where
   ν1 denotes an Abbe number of the first lens, and
   ν2 denotes an Abbe number of the second lens.
[7] The optical system according to any one of [1] to [6], in which
   the first lens unit includes a first lens, and
   a conditional expression below is satisfied: $- 2.0 < f 1 / f < - 0.3$ (3) where
   f1 denotes a focal length of the first lens, and
   f denotes a focal length of a total system.
[8] The optical system according to any one of [1] to [7], in which
   the second lens unit includes a second lens, and
   a conditional expression below is satisfied: $0.3 < f 2 / f < 3.0$ (4)
   where
   f2 denotes a focal length of the second lens, and
   f denotes a focal length of a total system.
[9] An imaging apparatus including:
   an optical system; and
   an imaging element that outputs an imaging signal corresponding to an optical image formed by the optical system, in which
   the optical system includes a plurality of lens units including a first lens unit, a second lens unit, and a third lens unit in order from an object side toward an image plane side, and
   the optical system includes, as the plurality of lens units,
      at least one or more units that each include a lens having refractive power on both surfaces, and
      at least one or more units that each include a substrate and a lens disposed on the substrate and having refractive power.
[10] The optical system according to any one of [1] to [8], further including a lens having substantially no refractive power.
[11] The imaging apparatus according to [9], in which the optical system further includes a lens having substantially no refractive power.

The present application claims the benefit of Japanese Priority Patent Application JP2023-217222 filed with the Japan Patent Office on December 22, 2023, the entire contents of which are incorporated herein by reference.

It should be understood by those skilled in the art that various modifications, combinations, sub-combinations, and alterations may occur depending on design requirements and other factors insofar as they are within the scope of the appended claims or the equivalents thereof.

## Claims

1. An optical system comprising
a plurality of lens units including a first lens unit, a second lens unit, and a third lens unit in order from an object side toward an image plane side, wherein
the optical system includes, as the plurality of lens units,
at least one or more units that each include a lens having refractive power on both surfaces, and
at least one or more units that each include a substrate and a lens disposed on the substrate and having refractive power.

2. The optical system according to claim 1, wherein
the first lens unit has negative refractive power, and
the third lens unit has positive refractive power.

3. The optical system according to claim 1, wherein the second lens unit has positive refractive power.

4. The optical system according to claim 1, wherein the second lens unit includes the substrate and a lens disposed on an object side of the substrate and having positive refractive power.

5. The optical system according to claim 1, wherein
the second lens unit includes a second lens, and
a conditional expression below is satisfied: $10 < ν 2 < 60$ (1)
where
ν2 denotes an Abbe number of the second lens.

6. The optical system according to claim 1, wherein
the first lens unit includes a first lens,
the second lens unit includes a second lens, and
a conditional expression below is satisfied: $10 < ν 1 - ν 2 < 60$ (2)
where
ν1 denotes an Abbe number of the first lens, and
ν2 denotes an Abbe number of the second lens.

7. The optical system according to claim 1, wherein
the first lens unit includes a first lens, and
a conditional expression below is satisfied: $- 2.0 < f 1 / f < - 0.3$ (3)
where
f1 denotes a focal length of the first lens, and
f denotes a focal length of a total system.

8. The optical system according to claim 1, wherein
the second lens unit includes a second lens, and
a conditional expression below is satisfied: $0.3 < f 2 / f < 3.0$ (4)
where
f2 denotes a focal length of the second lens, and
f denotes a focal length of a total system.

9. An imaging apparatus comprising:
an optical system; and
an imaging element that outputs an imaging signal corresponding to an optical image formed by the optical system, wherein
the optical system includes a plurality of lens units including a first lens unit, a second lens unit, and a third lens unit in order from an object side toward an image plane side, and
the optical system includes, as the plurality of lens units,
at least one or more units that each include a lens having refractive power on both surfaces, and
at least one or more units that each include a substrate and a lens disposed on the substrate and having refractive power.
